# EUROPÄISCHE PATENTSCHRIFT

(11) **EP 3 072 775 B1**
(45) Veröffentlichungstag und Bekanntmachung des Hinweises auf die Patenterteilung: **17.01.2018**
(21) Anmeldenummer: 15161357.7
(22) Anmeldetag: 27.03.2015
(51) Int. Cl.: B61L 9/00, H04B 14/02, G08G 1/095, B61L 5/18, B61L 9/04

(54) **Verfahren zur Rückmeldung des Leuchtens einer Signallampe in einem Verkehrssignal an eine Überwachungsvorrichtung**
METHOD FOR INDICATING THE LIGHTING OF A SIGNAL LIGHT IN A TRAFFIC SIGNAL TO A MONITORING DEVICE
PROCÉDÉ DE RÉPONSE DE L'ÉCLAIRAGE D'UNE LAMPE DE SIGNAL DANS UN SIGNAL DU TRAFIC SUR UN DISPOSITIF DE SURVEILLANCE

(43) Veröffentlichungstag der Anmeldung: 28.09.2016
(73) Patentinhaber: Siemens Schweiz AG, 8047 Zürich (CH)
(72) Erfinder: Moser, Mario, 9630 Wattwil (CH); Schmid, Rolf, 8712 Stäfa (CH)
(74) Vertreter: Maier, Daniel Oliver

(56) Entgegenhaltungen:
- EP-A1- 1 278 401
- EP-A1- 2 463 174
- EP-A2- 0 960 797
- EP-B1- 0 979 597
- US-A1- 2004 070 520
- US-A1- 2010 033 420
- US-A1- 2012 133 286

## Beschreibung

Die vorliegende Erfindung betrifft ein Verfahren zur Rückmeldung des Leuchtens einer Signallampe in einem Verkehrssignal an eine Überwachungsvorrichtung.

Nach wie vor kommt Lichtsignalen für die Steuerung von Verkehrsflüssen, insbesondere zur Steuerung des schienengebundenen Verkehrs, eine überragende Bedeutung zu, auch wenn beispielsweise in der Eisenbahntechnik mittlerweile Normen bestehen, die eine Zugbeeinflussung ausschliesslich aufgrund von per Funk in den Führerstand einer Lokomotive oder eines Steuerwagens übertragenen Informationen vorsehen (ETCS Level 2 und höher).

Derartige Lichtsignale sind derzeit noch zu einem weit überwiegenden Teil mit herkömmlichen Glühlampen ausgestattet. Die begrenzte Lebensdauer derartiger Leuchtmittel stellt jedoch ein sehr grosses Risiko für die Sicherheit des Verkehrs dar, weil nicht-leuchtende Signalpunkte den eigentlich anzuzeigenden Signalbegriff gefährlich verfälschen können. Aus diesem Grund stehen für die stellwerkseitige Überwachung der Funktion der Glühlampen vor allen Dingen solche Massnahmen bereit, die aus dem üblicherweise von einer Glühlampe aufgenommenen Lampenstrom auf die ordnungsgemässe Funktion derselben schliessen lassen. Naturgemäss besteht bei dieser Überwachungsart jedoch ein erhebliches Potential für Fehlfolgerungen, weil es beispielsweise aufgrund parasitärer Leckströme aufgrund der zum Teil sehr langen Kabelstrecken zu Stromflüssen kommt, die mit dem Leuchten der eigentlichen Signallampe überhaupt nichts zu tun haben.

Ebenso kann eine erhebliche (Personen-) Gefährdung typischerweise auch durch den Vorgang des Lampenwechsels resultieren, weil hier oft bei Dunkelheit, schlechten Witterungsbedingungen und mitunter auch unter erheblichem Zeitdruck gearbeitet werden muss. Besonders in gebirgigen Gebieten sind zudem die Zugänge zu den Lichtsignalen teilweise recht exponiert, beispielsweise auf Viadukten oder vor und nach Tunneln. Aufgrund der zunehmenden Automatisierung der Leit- und Stellwerktechnik sind heutzutage auch viele Stationen nicht mehr besetzt, was im Falle einer Störung dazu führt, dass die Anfahrtswege zur Behebung des Defekts länger werden und dadurch sowohl die Störungsdauer resp. die Verspätungsminuten zunehmen als auch die Kosten für die Beseitigung der Störung ansteigen.

US 2010/0033420 A1 offenbart ein Verfahren zur Steuerung einer Lichteinheit. Das in D1 beschriebene System weist eine Steuereinheit, eine LED-Leuchteinheit, eine Überwachungsvorrichtung und ein PWM Signalgeber auf. In US 2004/0070519 A1 «Compact light emitting diode retrofit lamp and method for traffic signal lights» ist eine Signalleuchte offenbart, bei der Glühlampen durch LED-Leuchtmittel ersetzbar sind. Dabei werden zu optischen Anpassung Fresnel Linsen eingesetzt. Die LED-Leuchtmittel beinhalten dabei bereits eine eigene Energieversorgung.

Aufgrund der deutlich längeren Lebensdauer von LED-Leuchtmitteln und aufgrund der Tatsache, dass die Glühfadenleuchtlampen mittel- bis langfristig ganz vom Markt verschwinden werden, wird daher zunehmend bei einer Ausrüstung/Nachrüstung von neuen bzw. bestehenden Signalanlagen dazu übergegangen, LED-Leuchtmittel einzusetzen. Diese LED-Leuchtmittel verfügen oft über eine grössere Anzahl von in einem Array angeordneten Einzel-LEDs, die zur Anzeige eines Signalbegriffs kollektiv zum Leuchten gebracht werden. Der Ausfall einer Einzel-LED oder einer geringen Anzahl von Einzel-LEDs kann aufgrund der grossen Anzahl von Lichtpunkte kaum ins Gewicht fallen, weshalb neben der gegenüber Glühlampen erhöhten Lebensdauer der LED auch die Systemfehlerrate deutlich geringer ist.

Da sich die Kennlinien von Glühfaden- und LED-Lampen jedoch grundsätzlich unterscheiden, sind insbesondere bei aus Relaisstellwerken versorgten Leuchtpunkten erhebliche Anpassungsmassnahmen vorzusehen, damit die deutlich geringere Leistungsaufnahme der LED-Lampen nicht zum Auslösen einer Störung führen. Diese Anpassungsmassnahmen sehen unter anderem die Nachbildung der Glühfadenkennlinie für das LED-Leuchtmittel vor, wobei jedoch zusätzliche Massnahmen getroffen werden müssen, um das Leuchten des LED-Leuchtmittels auch tatsächlich detektieren und in das Stellwerk zurückmelden zu können. Hierzu ist in der Regel ein Lichtsensor vorgesehen, der das Leuchten des LED-Leuchtmittels erfasst und dieses über eine separate Schnittstelle an die Überwachungseinheit meldet. Während diese Lösung funktionell sehr zuverlässig arbeitet und auch vergleichsweise einfach zu realisieren ist, haftet ihr jedoch der Nachteil an, dass für den Überwachungspfad separate Leitungen zu verlegen und zu prüfen sind.

Der vorliegenden Erfindung liegt daher die Aufgabe zugrunde, ein Verfahren zur Rückmeldung des Leuchtens einer Signallampe in einem Verkehrssignal an eine Überwachungsvorrichtung anzugeben, bei dem die Ausführung auf einfache Weise erzielt werden kann und im Besonderen das Verlegen zusätzlicher Kabeladern vermieden werden kann.

Diese Aufgabe wird erfindungsgemäss durch ein Verfahren zur Rückmeldung des Leuchtens einer Signallampe in einem Verkehrssignal an eine Überwachungsvorrichtung gelöst, welches die folgenden Verfahrensschritte umfasst:
a) Ansteuern der Signallampe mittels eines durch Pulsweitenmodulation bereitgestellten elektrischen Leistungssignals über eine Zweidrahtverbindung;
b) Detektieren eines Lichtstroms der Signallampe mittels eines Lichtsensors;
c) Aufbereitung eines von dem detektierten Lichtstrom abhängigen Überwachungssignals;
d) Rücksenden des Überwachungssignals über die Zweidrahtverbindung in einer Lücke der Pulsweitenmodulation und
e) Auswerten des Überwachungssignals in der Überwachungsvorrichtung.

Auf diese Weise kann das Überwachungssignal auf der Zweidrahtverbindung an die Überwachungsvorrichtung zurück gespeist werden, was die Verlegung weiterer Kabeladern obsolet macht. Die Rückführung des Überwachungssignals ist zudem rückwirkungsfrei auf den Versorgungspfad, weil entweder die Lücke in der Pulsweitenmodulation oder die temporäre, unterhalb der Detektionsschwelle liegende Lastmanipulation zur Rückführung genutzt werden.

In einer vorteilhaften Ausgestaltung der vorliegenden Erfindung kann die Pulsweitenmodulation mit einem Austastungsgrad von 0 bis 70% ausgeführt sein. Die Rücksendung des Überwachungssignals kann entsprechend in dem verbleibenden restlichen Zeitfenster der Pulsweitenmodulation ausgeführt werden.

Eine weitere vorteilhafte Ausgestaltung der vorliegenden Erfindung kann erzielt werden, wenn die Rücksendung durch eine temporäre Addition des Überwachungssignals auf das elektrische Leistungssignal erfolgt.

Weitere vorteilhafte Ausgestaltungen sind in den übrigen Unteransprüchen ausgeführt.

Vorteilhafte Ausgestaltungen der vorliegenden Erfindung werden anhand einer Zeichnung näher erläutert. Dabei zeigen:
- Figur 1: in schematischer Darstellung ein Blockschaltbild einer Einrichtung zur Rückführung eines Überwachungssignals in einer ersten Ausführungsform;
- Figur 2: in schematischer Darstellung eine Signalrückführung in einem Signalzuführungspfad mit Pulsweitenmodulation; und
- Figur 3: in schematischer Darstellung ein Blockschaltbild einer Einrichtung zur Rückführung eines Überwachungssignals in einer zweiten Ausführungsform.

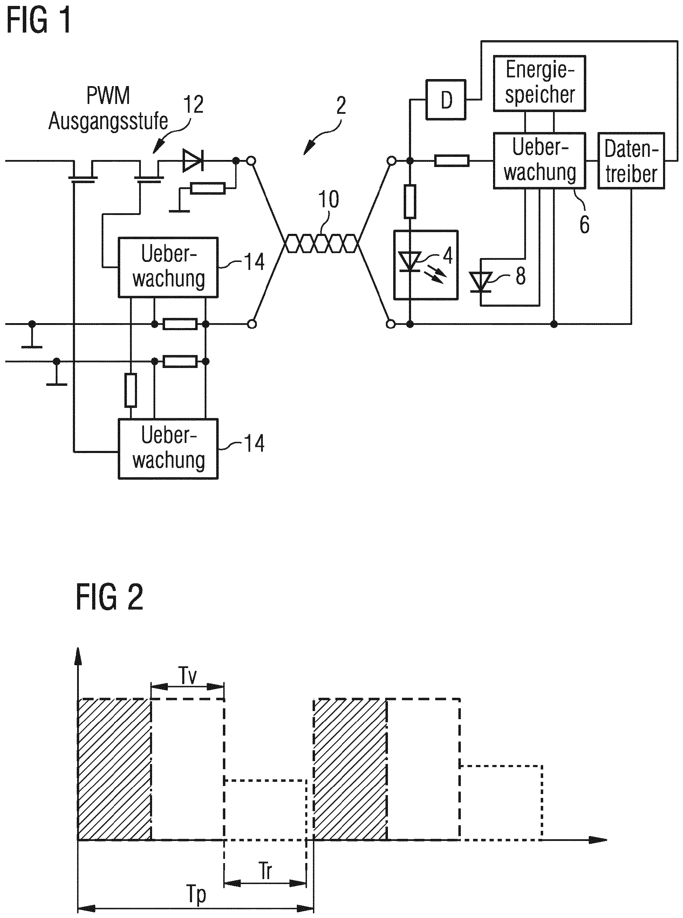

Die Figur 1 zeigt in schematischer Darstellung ein Blockschaltbild einer Einrichtung 2 zur Rückführung eines Überwachungssignals für ein LED-Leuchtmittel 4 in einer ersten Ausführungsform. Das LED-Leuchtmittel 4 kann beispielsweise in einem Eisenbahnsignal oder einer Verkehrsampel eingesetzt werden. Zur Überwachung des Leuchtens des LED-Leuchtmittels 4 ist ein mit einem Überwachungskreis 6 verbundener Lichtsensor 8 vorgesehen.

Das LED-Leuchtmittel 4 (auch einfach Signallampe genannt) wird über eine Zweidrahtverbindung 10 durch eine PWM-Ausgangsstufe 12 mittels eines pulsweitenmodulierten Signals mit elektrischer Leistung versorgt. Im Betrieb wird nun das Leuchten des LED-Leuchtmittels 4 mit dem Lichtsensor 8 detektiert, und ein dem detektierten Zustand entsprechendes Überwachungssignal wird im Überwachungskreis 6 generiert. Dieses Überwachungssignal wird nun mit einem Signalsplitter in die Zweidrahtverbindung 10 eingespeist und somit an eine mit der PWM-Ausgangsstufe 12 assoziierte Überwachungseinrichtung 14 zurückgesendet. Dabei erfolgt das Rücksenden des Überwachungssignals gemäss der Ausführungsform in Figur 1 über die Zweidrahtverbindung 10 in einer Lücke der Pulsweitenmodulation PWM. Zu diesem Zweck wird die Pulsweitenmodulation PWM mit einem Austastungsgrad von 0 bis 70% ausgeführt und die Rücksendung des Überwachungssignals erfolgt in dem verbleibenden restlichen Zeitfenster der Pulsweitenmodulation.

Dieser Zusammenhang ist in Figur 2 beispielhaft dargestellt. Die Periodendauer der Pulsweitenmodulation beträgt Tₚ, worin die Periodendauer für die elektrische Leistungsversorgung Tᵥ enthalten ist. In der verbleibenden Zeit - hier Rückführungslücke Tᵣ ( Tᵣ = Tₚ - Tᵥ) genannt - wird das Überwachungssignal an die Überwachungseinrichtung 14 zurückgeführt. In der Überwachungseinrichtung 14 wird dann das Auswerten des Überwachungssignals vorgenommen und dessen Ergebnis an eine höhere Überwachungsinstanz, wie z.B. Verkehrsleitzentrale, Stellwerk, Leitsystem, übertragen.

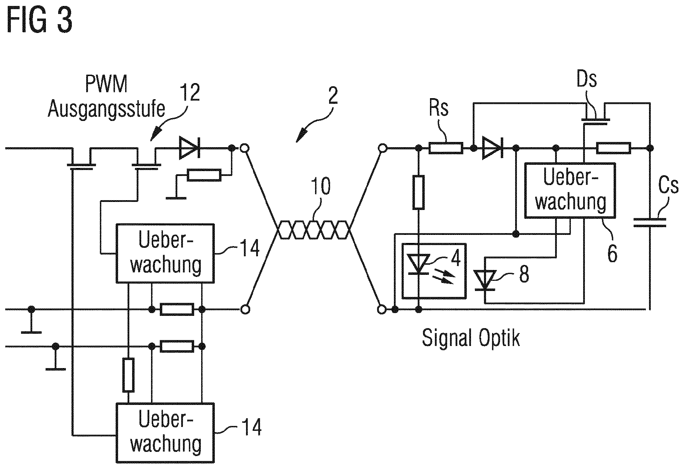

Figur 3 Zeigt in schematischer Darstellung ein Blockschaltbild der Einrichtung 2 zur Rückführung eines Überwachungssignals in einer zweiten Ausführungsform. Die Energie zum Betrieb des Überwachungskreises 6 wird hier mit einem Tiefpass, der einen Widerstand Rₛ, eine Diode Dₛ und einen Kondensator Cₛ umfasst, aufbereitet.

Signaltechnisch könnte das Überwachungssignal auch auf die mittels der Pulsweitenmodulation erzielte elektrische Leistungsversorgung des LED-Leuchtmittels 4 addiert werden. Hierzu könnte der Überwachungskreis 6 eine temporäre Variation der Last zur Erzielung einer entsprechend temporären Stromänderung in der Zweidrahtverbindung 10 herbeiführen, die mit der Überwachungsvorrichtung 14 detektiert und ausgewertet wird.

## Patentansprüche

1. Verfahren zur Rückmeldung des Leuchtens einer Signallampe (4) in einem Verkehrssignal an eine Überwachungsvorrichtung (14), umfassend die folgenden Verfahrensschritte:
a) Ansteuern der Signallampe (4) mittels eines durch Pulsweitenmodulation bereitgestellten elektrischen Leistungssignals über eine Zweidrahtverbindung (10);
b) Detektieren eines Lichtstroms der Signallampe (4) mittels eines Lichtsensors;
c) Aufbereitung eines von dem detektierten Lichtstrom abhängigen Überwachungssignals;
d) Rücksenden des Überwachungssignals über die Zweidrahtverbindung (10) in einer Lücke (Tᵣ) der Pulsweitenmodulation; und
e) Auswerten des Überwachungssignals in der Überwachungsvorrichtung (14).

2. Verfahren nach Anspruch 1,
**dadurch gekennzeichnet, dass**
die Pulsweitenmodulation mit einem Austastungsgrad von 0 bis 70% ausgeführt wird und die Rücksendung des Überwachungssignals in dem verbleibenden restlichen Zeitfenster (Tᵣ) der Pulsweitenmodulation ausgeführt wird.

3. Verfahren zur Rückmeldung des Leuchtens einer Signallampe (4) in einem Verkehrssignal an eine Überwachungsvorrichtung (14), umfassend die folgenden Verfahrensschritte:
a) Ansteuern der Signallampe (4) mittels eines durch Pulsweitenmodulation bereitgestellten elektrischen Leistungssignals über eine Zweidrahtverbindung (10);
b) Detektieren eines Lichtstroms der Signallampe (4) mittels eines Lichtsensors;
c) Aufbereitung eines von dem detektierten Lichtstrom abhängigen Überwachungssignals;
d) Rücksenden des Überwachungssignals über die Zweidrahtverbindung (10) durch eine durch eine temporäre Variation der Last hervorgerufene Stromänderung an die Überwachungsvorrichtung (14), wobei die Rücksendung durch eine temporäre Addition des Überwachungssignals auf das elektrische Leistungssignal erfolgt; und
e) Auswerten des Überwachungssignals in der Überwachungsvorrichtung (14).

## Claims

1. Method for indicating the lighting of a signal light (4) in a traffic signal to a monitoring device (14), comprising the following method stops:
a) actuating the signal light (4) by means of an electrical power signal provided by pulse width modulation via a two-wire connection (10);
b) detecting a light flux of the signal light (4) by means of a light sensor;
c) processing a monitoring signal dependent on the detected light flux;
d) returning the monitoring signal via the two-wire connection (10) in a gap (Tᵣ) in the pulse width modulation; and
e) evaluating the monitoring signal in the monitoring device (14).

2. Method according to claim 1,
**characterised in that**
the pulse width modulation is executed with a degree of blanking of 0 to 70% and the returning of the monitoring signal is executed in the remaining residual time window (Tᵣ) of the pulse width modulation.

3. Method for indicating the lighting of a signal light (4) in a traffic signal to a monitoring device (14), comprising the following method steps:
a) actuating the signal light (4) by means of an electrical power signal provided by pulse width modulation via a two-wire connection (10);
b) detecting a light flux of the signal light (4) by means of a light sensor;
c) processing a monitoring signal dependent on the detected light flux;
d) returning the monitoring signal via the two-wire connection (10) to the monitoring device (14) by a change in flux caused by a temporary variation of the load, wherein the returning is effected by a temporary addition of the monitoring signal to the electrical power signal; and
e) evaluating the monitoring signal in the monitoring device (14).

## Revendications

1. Procédé de réponse de l'éclairage d'une lampe de signalisation (4) dans un signal de trafic sur un dispositif de surveillance (14), comprenant les étapes suivantes :
a) activation de la lampe de signalisation (4) au moyen d'un signal électrique de puissance fourni par modulation de largeur d'impulsion par l'intermédiaire d'une liaison à deux fils (10),
b) détection d'un flux lumineux de la lampe de signalisation (4) au moyen d'un capteur de lumière,
c) préparation d'un signal de surveillance en fonction du flux lumineux détecté,
d) renvoi du signal de surveillance via la liaison à deux fils (10) dans une lacune (Tᵣ) de la modulation de largeur d'impulsion, et
e) évaluation du signal de surveillance dans le dispositif de surveillance (14).

2. Procédé selon la revendication 1,
**caractérisé en ce que** la modulation de largeur d'impulsion est réalisée avec un taux de suppression de 0 à 70 % et le renvoi du signal de surveillance est effectué dans l'intervalle de temps restant (Tᵣ) de la modulation de largeur d'impulsion.

3. Procédé de réponse de l'éclairage d'une lampe de signalisation (4) dans un signal du trafic sur un dispositif de surveillance (14), comprenant les étapes suivantes :
a) activation de la lampe de signalisation (4) au moyen d'un signal électrique de puissance fourni par modulation de largeur d'impulsion par l'intermédiaire d'une liaison à deux fils (10),
b) détection d'un flux lumineux de la lampe de signalisation (4) au moyen d'un capteur de lumière,
c) préparation d'un signal de surveillance en fonction du flux lumineux détecté,
d) renvoi du signal de surveillance via la liaison à deux fils (10) par une modification de courant provoquée par une variation temporaire de la charge au dispositif de surveillance (14), le renvoi étant réalisé au moyen d'une addition temporaire du signal de surveillance sur le signal électrique de puissance, et
e) évaluation du signal de surveillance dans le dispositif de surveillance (14).
